# EUROPEAN PATENT APPLICATION

(11) **EP 4 404 654 A1**
(43) Date of publication of application: **24.07.2024**
(21) Application number: 21957044.7
(22) Date of filing: 15.09.2021
(51) Int. Cl.: H04W 72/04

(54) **WIRELESS COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); ZHANG, Zhi, Dongguan, Guangdong 523860 (CN); ZUO, Zhisong, Dongguan, Guangdong 523860 (CN)
(74) Representative: Novagraaf Technologies
(86) International application number: PCT/CN2021/118555
(87) International publication number: WO 2023/039754

(57) **Abstract**

A wireless communication method, a terminal device and a network device. The method comprises: a terminal device performing data frame transmission, wherein at least one synchronization sequence is received during the data frame transmission process.

## Description

### TECHNICAL FIELD

Embodiments of the present disclosure relate to the communication field, and in particular to a method for wireless communication, a terminal device and a network device.

### BACKGROUND

In a passive Internet of Things scenario, a terminal device has an extremely low complexity due to the cost and power consumption requirements, so the implementations of both radio frequency (RF) and baseband are relatively simple. For example, an RC oscillator is usually used to provide a clock. Although RC oscillator has the advantages of low price, small size and low power consumption, the accuracy of RC oscillator is poor, and the error may reach 5% or even higher. Therefore, for a terminal with a lower clock accuracy, how to maintain more accurate timing during a process of transmitting the data is an urgent problem to be solved.

### SUMMARY

The present disclosure provides a method for wireless communication, a terminal device, and a network device, which is beneficial to ensuring that the terminal device maintains more accurate timing in data transmission.

In a first aspect, a method for wireless communication is provided. The method includes that: a terminal device transmits a data frame, herein at least one synchronization sequence is received during a process of transmitting the data frame.

In a second aspect, a method for wireless communication is provided. The method includes that: a terminal device reports synchronization capability information of the terminal device.

In a third aspect, a method for wireless communication is provided. The method includes that: a network device sends at least one synchronization sequence during a process of transmitting a data frame.

In a fourth aspect, a method for wireless communication is provided. The method includes that: a network device receives synchronization capability information of a terminal device.

In a fifth aspect, a terminal device is provided, which is configured to perform the method in any of the above first aspect and the second aspect or implementations thereof.

Specifically, the terminal device includes function modules configured to perform the method in any of the above first aspect and the second aspect or implementations thereof.

In a sixth aspect, a network device is provided, which is configured to perform the method in any of the above third aspect and the fourth aspect or implementations thereof.

Specifically, the network device includes function modules configured to perform the method in any of the above third aspect and the fourth aspect or implementations thereof.

In a seventh aspect, a terminal device is provided, which includes a processor and a memory. The memory is configured to store a computer program, and the processor is configured to call and run the computer program stored in the memory to perform the method in any of the above first aspect and the second aspect or implementations thereof.

In an eighth aspect, a network device is provided, which includes a processor and a memory. The memory is configured to store a computer program, and the processor is configured to call and run the computer program stored in the memory to perform the method in any of the above third aspect and the fourth aspect or implementations thereof.

In a ninth aspect, a chip is provided, which is configured to implement the method in any of the above first aspect to the fourth aspect or implementations thereof.

Specifically, the chip includes: a processor, configured to call and run a computer program in a memory, which causes a device on which the chip is installed to perform the method in any of the above first aspect to the fourth aspect or implementations thereof.

In a tenth aspect, a computer-readable storage medium is provided, which is configured to store a computer program that causes a computer to perform the method in any of the above first aspect to the fourth aspect or implementations thereof.

In an eleventh aspect, a computer program product is provided, which includes computer program instructions that cause a computer to perform the method in any of the above first aspect to the fourth aspect or implementations thereof.

In a twelfth aspect, a computer program is provided that, when running on a computer, causes the computer to perform the method in any of the above first aspect to the fourth aspect or implementations thereof.

According to the above technical solutions, the network device adds the transmission of one or more synchronization sequences during the process of transmitting the data frame, so that the terminal device may carry out clock synchronization based on the one or more synchronization sequences during the process of transmitting the data frame, which is beneficial to ensuring that the terminal device maintains more accurate timing during the data frame transmission and improving transmission performance.

Alternatively, by the terminal device reporting the synchronization capability information, the network device may schedule the terminal device based on the synchronization capability information of the terminal device, for example, the terminal device is scheduled to carry out transmission whose duration does not exceed the maximum transmission duration, or the terminal device is scheduled to receive at least one synchronization sequence during transmitting the data frame, etc., which is beneficial to ensuring that the terminal device maintains more accurate timing during data transmission and improving transmission performance.

### BRIEF DESCRIPTION OF THE DRAWINGS

FIG. 1 is a schematic diagram of a communication system architecture provided by an embodiment of the present disclosure.
FIG. 2 is a schematic diagram of a zero-power consumption communication system according to an example of the present disclosure.
FIG. 3 is a schematic diagram of power harvesting provided by an embodiment of the present disclosure.
FIG. 4 is a schematic diagram of a back scattering communication provided by an embodiment of the present disclosure.
FIG. 5 is a schematic diagram of a circuit of a resistive load modulation provided by an embodiment of the present disclosure.
FIG. 6 is a schematic diagram of a method for wireless communication provided by an embodiment of the present disclosure.
FIG. 7 is a schematic diagram of transmitting an uplink data frame according to an embodiment of the present disclosure.
FIG. 8 is another schematic diagram of transmitting an uplink data frame according to an embodiment of the present disclosure.
FIG. 9 is still another schematic diagram of transmitting an uplink data frame according to an embodiment of the present disclosure.
FIG. 10 is a schematic diagram of transmitting a downlink data frame according to an embodiment of the present disclosure.
FIG. 11 is another schematic diagram of transmitting a downlink data frame according to an embodiment of the present disclosure.
FIG. 12 is still another schematic diagram of transmitting a downlink data frame according to an embodiment of the present disclosure.
FIG. 13 is a schematic diagram of a synchronization sequence according to an embodiment of the present disclosure.
FIG. 14 is a schematic diagram of another method for wireless communication provided by an embodiment of the present disclosure.
FIG. 15 is a schematic block diagram of a terminal device provided by an embodiment of the present disclosure.
FIG. 16 is a schematic block diagram of another terminal device provided by an embodiment of the present disclosure.
FIG. 17 is a schematic block diagram of a network device provided by an embodiment of the present disclosure.
FIG. 18 is a schematic block diagram of another network device provided by an embodiment of the present disclosure.
FIG. 19 is a schematic block diagram of a communication device provided by an embodiment of the present disclosure.
FIG. 20 is a schematic block diagram of a chip provided by an embodiment of the present disclosure.
FIG. 21 is a schematic block diagram of a communication system provided by an embodiment of the present disclosure.

### DETAILED DESCRIPTION

The technical solution of embodiments of the present disclosure will be described in conjunction with the accompanying drawings in embodiments of the present disclosure below, and it will be obvious that the described embodiments are part of embodiments of the present disclosure, but not all of them. With respect to embodiments in the present disclosure, all other embodiments obtained by those ordinarily skilled in the art without making creative efforts fall within the scope of protection of the present disclosure.

The technical solution of embodiments of the present disclosure may be applied to various communication systems, such as global system of mobile communication (GSM) system, code division multiple access (CDMA) system, wideband code division multiple access (WCDMA) system, general packet radio service (GPRS), long term evolution (LTE) system, advanced long term evolution (LTE-A) system, new radio (NR) system, evolution system of NR system, LTE-based access to unlicensed spectrum (LTE-U) system, NR-based access to unlicensed spectrum (NR-U) system, non-terrestrial networks (NTN) system, universal mobile telecommunication system (UMTS), wireless local area networks (WLAN), wireless fidelity (WiFi), 5th-Generation (5G) system, cellular Internet of Things system, cellular passive Internet of Things system or other communication systems, etc.

In general, traditional communication systems support a limited number of connections and are easy to implement. However, with the development of communication technology, mobile communication systems will not only support traditional communication, but also support, for example, device to device (D2D) communication, machine to machine (M2M) communication, machine type communication (MTC), vehicle to vehicle (V2V) communication, or vehicle to everything (V2X) communication, etc. Embodiments of the present disclosure may also be applied to these communication systems.

Optionally, the communication system of embodiments of the present disclosure may be applied to a carrier aggregation (CA) scenario, a dual connectivity (DC) scenario, or a standalone (SA) network deployment scenario.

Optionally, the communication system of embodiments of the present disclosure may be applied to an unlicensed spectrum, herein the unlicensed spectrum may also be considered as a shared spectrum; or the communication system of embodiments of the present disclosure may also be applied to an authorized spectrum, herein the authorized spectrum may also be considered as a non-shared spectrum.

Various embodiments are described in connection with a network device and a terminal device by embodiments of the present disclosure, herein the terminal device may also be referred to as a user equipment (UE), an access terminal, a subscriber unit, a subscriber station, a mobile station, a mobile platform, a remote station, a remote terminal, a mobile device, a user terminal, a terminal, a device for wireless communication, a user agent, or a user device, etc.

In embodiments of the present disclosure, the network device may be a device for communicating with a mobile device, the network device may be an access point (AP) in a WLAN, a base transceiver station (BTS) in a GSM or CDMA, a base station in a WCDMA (NodeB, NB), an evolved base station in a LTE (evolutional node B, eNB or eNodeB), a relay station or an AP, a vehicle-mounted device, a wearable device, a network device in an NR network (gNB), or a network device in a cellular Internet of Things, or a network device in a cellular passive Internet of Things, or a network device in a future evolved PLMN network or a network device in an NTN network, etc.

By way of example and not limitation, in embodiments of the present disclosure, the network device may have mobility characteristics, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, and the like. Optionally, the network device may also be a base station set on land, water and the like.

In embodiments of the present disclosure, the network device may provide services for a cell, and the terminal device communicates with the network device through the transmission resources (e.g. frequency domain resources, or spectrum resources) used by the cell. The cell may be a cell corresponding to the network device (e.g. a base station), and the cell may belong to a macro base station or a base station corresponding to a small cell. The small cell may include a metro cell, a micro cell, a pico cell, a femto cell, etc. These small cells have the characteristics of small coverage and low transmission power, and are suitable for providing high-speed data transmission services.

The terminal device may be a STATION (ST) in a WLAN, a cellular telephone, a cordless telephone, a SIP telephone, a WLL station, a PDA device, a handheld device with wireless communication function, a computing device or other processing devices connected to a wireless modem, a vehicle-mounted device, a wearable device, a terminal device in a next generation communication system such as an NR network, or a terminal device in a future evolved public land mobile network (PLMN) network, a terminal device in a cellular Internet of Things, a terminal device in a cellular passive Internet of Things, etc.

In embodiments of the present disclosure, the terminal device may be deployed on land, including indoor or outdoor, hand-held, wearable or vehicle-mounted; may also be deployed on the water (such as ships, etc.); may also be deployed in the air (such as airplanes, balloons and satellites, etc.).

In embodiments of the present disclosure, the terminal device may be a mobile phone, a pad, a computer with wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home.

By way of example and not limitation, in embodiments of the present disclosure, the terminal device may also be a wearable device. The wearable device may also be referred to as a wearable intelligent device, which is a general name of devices developed to be worn by applying wearable technology to intelligently design daily wear, such as glasses, gloves, watches, clothing and shoes, etc. The wearable device is a portable device that is worn directly on the body or integrated into the user's clothes or accessories. The wearable device is not only a hardware device, but also realizes powerful functions through software support, data interaction and cloud interaction. Generalized wearable intelligent devices include full functions and large sizes, and may realize complete or partial functions without relying on smart phones, such as smart watches or smart glasses, etc., and only focus on certain application functions, which need to be used in conjunction with other devices such as smart phones, such as various smart bracelets and smart jewelry for monitoring physical signs.

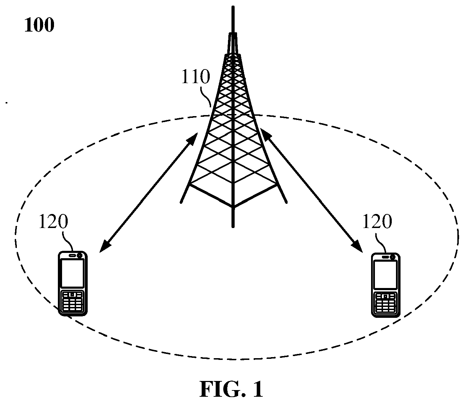

Exemplarily, a communication system 100 to which embodiments of the present disclosure are applied is illustrated in FIG. 1. The communication system 100 may include a network device 110, which may be a device that communicates with a terminal device 120 (or referred to as a communication terminal, or a terminal). The network device 110 may provide communication coverage for a specific geographic area and may communicate with a terminal device located within the coverage area.

FIG. 1 exemplarily illustrates one network device and two terminal devices. Optionally, the communication system 100 may include multiple network devices, and other numbers of terminal devices may be included within the coverage area of each network device, which is not limited by embodiments of the present disclosure.

Optionally, the communication system 100 may also include other network entities such as a network controller, a mobility management entity and the like, which are not limited by embodiments of the present disclosure.

It should be understood that a device with a communication function in a network/system in an embodiment of the present disclosure may be referred to as a communication device. Taking the communication system 100 illustrated in FIG. 1 as an example, the communication device may include a network device 110 and a terminal device 120 with a communication function, and the network device 110 and the terminal device 120 may be specific devices described above, which will not be repeated here. The communication device may also include other devices in the communication system 100 such as a network controller, a mobility management entity and other network entities, which are not limited by embodiments of the present disclosure.

It should be understood that the terms "system" and "network" are often used interchangeably in the present disclosure. The term "and/or" in the present disclosure is only an association relationship describing associated objects and represents that three relationships may exist. For example, A and/or B may represent three conditions: independent existence of A, existence of both A and B and independent existence of B. In addition, character "/" in the present disclosure usually represents that previous and next associated objects form an "or" relationship.

It should be understood that the reference to "indication" in embodiments of the present disclosure may be a direct indication, may be an indirect indication, or may be indicative of an association. For example, A indicates B, which can mean that A directly indicates B, for example, B can be obtained through A. It can also mean that A indirectly indicates B, for example, A indicates C, and B can be obtained through C. It can also mean that there is an association between A and B.

In the description of embodiments of the present disclosure, the term "correspond" may mean that there is a direct correspondence or an indirect correspondence relationship between the two, may also mean that there is an association relationship between the two, may also be a relationship between indication and being indicated, configuration and being configured, etc.

In embodiments of the present disclosure, "predefined" or "preconfigured" may be achieved by pre-storing corresponding codes, tables or other means that may be used to indicate relevant information in devices (e.g., including terminal devices and network devices), and the present disclosure does not limit the specific implementation thereof. For example, predefined may refer to being defined in the protocol.

In embodiments of the present disclosure, the "protocol" may refer to standard protocols in the communication field, for example, may include LTE protocol, NR protocol and related protocols applied in future communication systems, which are not limited in the present disclosure.

In order to facilitate understanding of the technical solution of embodiments of the present disclosure, the related technology of the present disclosure is explained.

### I. Zero-power consumption communication

Power harvesting and back scattering communication technology are adopted for zero-power consumption communication. A zero-power consumption communication network consists of a network device and a zero-power consumption terminal.

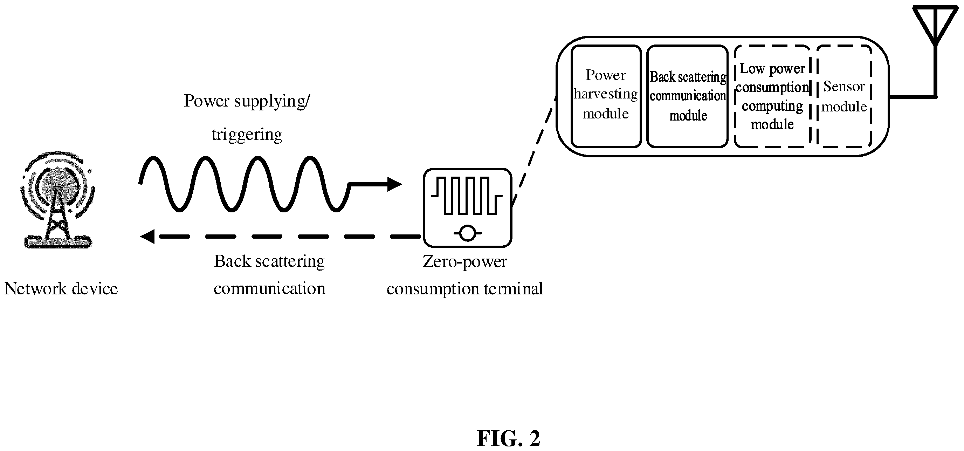

As illustrated in FIG. 2, the network device is used to send a wireless power supply signal, a downlink communication signal to the zero-power consumption terminal, and receive a back scattering signal from the zero-power consumption terminal. A basic zero-power consumption terminal includes a power harvesting module, a back scattering communication module and a low-power calculation module. In addition, the zero-power consumption terminal may also have a memory or sensor for storing some basic information (such as item identification, etc.) or acquiring sensing data such as ambient temperature and ambient humidity.

The key technologies in zero-power consumption communication will be explained below.

### 1. RF Power Harvesting

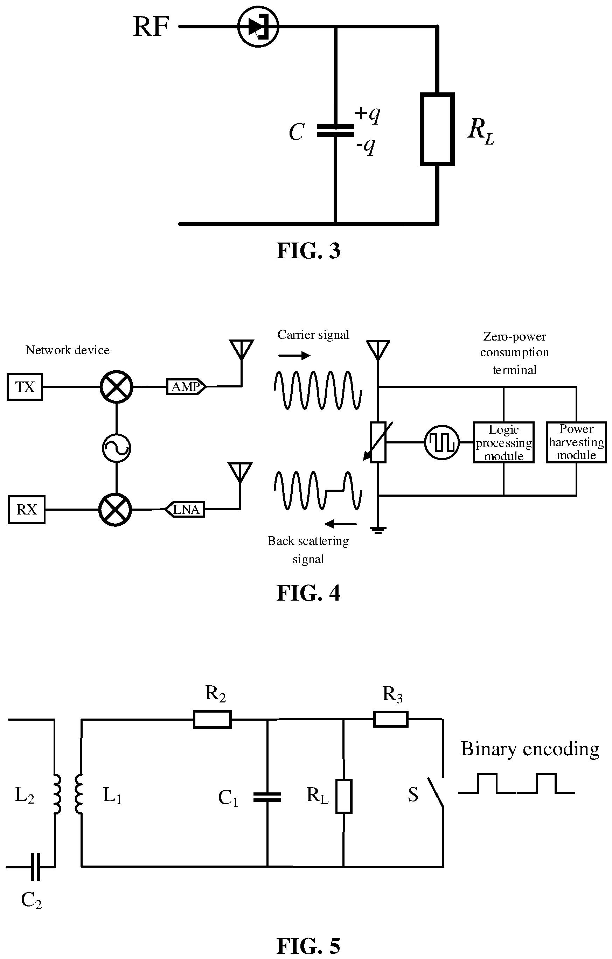

As illustrated in FIG. 3, a RF power harvesting module realizes the harvesting of space electromagnetic wave power according to the principle of electromagnetic induction, and then obtains the power required to drive the zero-power consumption terminal operation, such as driving the low-power demodulation and modulation module, sensors and memory reading, etc. Therefore, the zero-power consumption terminal does not need a conventional battery.

### 2. Back Scattering communication

As illustrated in FIG. 4, the zero-power consumption terminal receives a carrier signal sent by the network device, modulates the carrier signal, loads the information to be sent and radiates the modulated signal from an antenna. This process of transmitting the information is referred to as back scattering communication. Back scattering and load modulation functions are inseparable. By adjusting and controlling the circuit parameters of the oscillation loop of the zero-power consumption terminal based on the beat of the data stream, the load modulation makes the parameters such as the impedance of the electronic tag change accordingly, thus completing the process of modulation. Load modulation technology mainly includes two ways of resistance load modulation and capacitance load modulation. In resistive load modulation, a load is connected in parallel with a resistor that is turned on or off based on control of a binary data stream, as illustrated in FIG. 5. Switching the resistor on and off will cause the circuit voltage change, so amplitude shift keying (ASK) is realized, that is, the modulation and transmission of the signal are realized by adjusting the amplitude of the back scattering signal of the zero-power consumption terminal. Similarly, in capacitor load modulation, the resonant frequency of the circuit may be changed by switching a capacitor on and off, and frequency shift keying (FSK) is realized, that is, the modulation and transmission of the signal are realized by adjusting the working frequency of the back scattering signal of the zero-power consumption terminal.

It can be seen that the zero-power consumption terminal modulates the information of the incoming signal by means of load modulation, thus realizing the process of back scattering communication. Therefore, the zero-power consumption terminal has significant advantages:
(1) the terminal does not actively transmit signals, so there is no need for complex RF links, such as a power amplifier (PA), a RF filter, etc.;
(2) the terminal does not need to actively generate high-frequency signals, so there is no need for high-frequency crystal oscillators;
(3) by means of back scattering communication, the terminal does not need to consume its own power when transmitting the signal. 2. RF Power Harvesting

### 3. Encoding technology

The data transmitted by electronic tags may be represented by binary "1" and "0" in different forms of codes. A radio frequency identification (RFID) system usually uses one of the following encoding methods: reverse non return zero (NRZ) encoding, Manchester encoding, Unipolar RZ encoding, differential binary phase (DBP) encoding, differential encoding, pulse interval encoding (PIE), bidirectional spatial encoding (FMO), Miller encoding, differential encoding, etc. Generally speaking, different pulse signals are used to represent 0 and 1.

In some scenarios, based on a source of power and usage of zero-power consumption terminals, zero-power consumption terminals may be divided into the following types.

### 1. Passive zero-power consumption terminal

The zero-power consumption terminal does not need a built-in battery. When the zero-power consumption terminal approaches the network device (such as a reader of the RFID system), the zero-power consumption terminal is in a near-field range formed by the antenna radiation of the network device. Therefore, the zero-power consumption terminal antenna generates an induced current through electromagnetic induction, and the induced current drives the low-power chip circuit of the zero-power consumption terminal. Demodulation of a forward link signal and modulation of a reverse link signal are realized. For the back scattering link, the zero-power consumption terminal uses the back scattering implementation to transmit the signal.

It can be seen that passive zero-power consumption terminal does not need built-in battery to drive either the forward link or the reverse link, so it is a true meaning of zero-power consumption terminal.

Passive zero-power consumption terminal does not need batteries, and the RF circuit and baseband circuit are very simple, such as not requiring devices such as low noise amplifier (LNA), PA, crystal oscillator, analog-to-digital converter (ADC), so it has many advantages such as small size, light weight, very cheap price and long service life.

### 2. Semi-passive zero-power consumption terminal

Semi-passive zero-power consumption terminal is also not equipped with conventional batteries, but may use RF power harvesting module to harvest radio wave power, and store the harvested power in a power storage unit (such as capacitor). After the power storage unit obtains power, it may drive the low-power chip circuit of the zero-power consumption terminal. Demodulation of a forward link signal and modulation of a reverse link signal are realized. For the back scattering link, the zero-power consumption terminal uses the back scattering implementation to transmit the signal.

It can be seen that semi-passive zero-power consumption terminal does not need built-in battery to drive either the forward link or the reverse link. Although the power stored in capacitors is used in the work, the power comes from the radio power harvested by the power harvesting module, so it is also a true meaning of zero-power consumption terminal.

Semi-passive zero-power consumption terminal inherits many advantages of passive zero-power consumption terminal, so it has many advantages such as small size, light weight, very cheap price and long service life.

### 3. Active zero-power consumption terminal

The zero-power consumption terminal used in some scenarios may also be an active zero-power consumption terminal, and such terminals may have built-in batteries. A battery is used to drive the low-power chip circuit of the zero-power consumption terminal. Demodulation of a forward link signal and modulation of a reverse link signal are realized. However, for the back scattering link, the zero-power consumption terminal uses the back scattering implementation to transmit the signal. Therefore, the zero-power consumption of this kind of terminal is mainly reflected in the fact that transmitting signal in the reverse link does not need the power of the terminal itself, but uses the way of back scattering.

### II. Cellular passive Internet of Things

With the increasing application of 5G industry, there are more and more types and application scenarios of connectors, and there will be higher requirements for the cost and power consumption of the communication terminal. The application of battery-free and low-cost passive Internet of Things devices has become the key technology of cellular Internet of Things, which enriches the types and number of 5G network link terminals and truly realizes the interconnection of everything. Herein, a passive Internet of Things device may be based on zero-power consumption communication technology, such as RFID technology, and extend on this basis to be suitable for cellular Internet of Things.

The zero-power consumption terminal has an extremely low complexity, so the implementations of both RF and baseband are relatively simple. For a traditional terminal, such as a smart phone, quartz crystal oscillators are usually used to provide baseband clock and generate high-frequency signals. For the zero-power consumption terminal, limited by the size, cost and power consumption that can be withstood, generally, quartz crystal oscillators cannot be used to provide the clock, while RC oscillators are commonly used to provide the clock. Although RC oscillator has the advantages of low price, small size and low power consumption, the accuracy of RC oscillator is poor, and the error may reach 5% or even higher.

The terminal device may not maintain an accurate clock during data transmission, which may cause the following problems.
1) Resulting in uncontrollable data transmission duration, for example, the network device schedules the terminal device to transmit for 1 ms, but due to the clock error, the terminal device may actually transmit for 1.05 ms. Therefore, it may cause interference to adjacent time transmissions (transmissions from other terminal devices or network devices).
2) Due to the deviation of the clock, the transmission position of the data symbol is deviated. For example, for uplink data symbols sent by the zero-power consumption terminal, the deviation of transmission data symbol position may lead to deviation or error of sampling position during network device side reception, which leads to degradation of data demodulation performance.
3) In a TDD system, when the uplink transmission of the terminal device is uncontrollable, the uplink transmission may extend to the position of downlink transmission due to the existence of clock deviation, thus affecting the downlink transmission of the network device.

Therefore, for the zero-power consumption terminal, how to maintain more accurate timing during a process of transmitting the data is an urgent problem to be solved.

In order to facilitate understanding of the technical solution of embodiments of the present disclosure, the technical solution of the present disclosure will be described in detail below by way of specific embodiments. As an optional solution, the above related technology may be arbitrarily combined with the technical solution of embodiments of the present disclosure, and all of them belong to the protection scope of embodiments of the present disclosure. Embodiments of the present disclosure include at least some of the following.

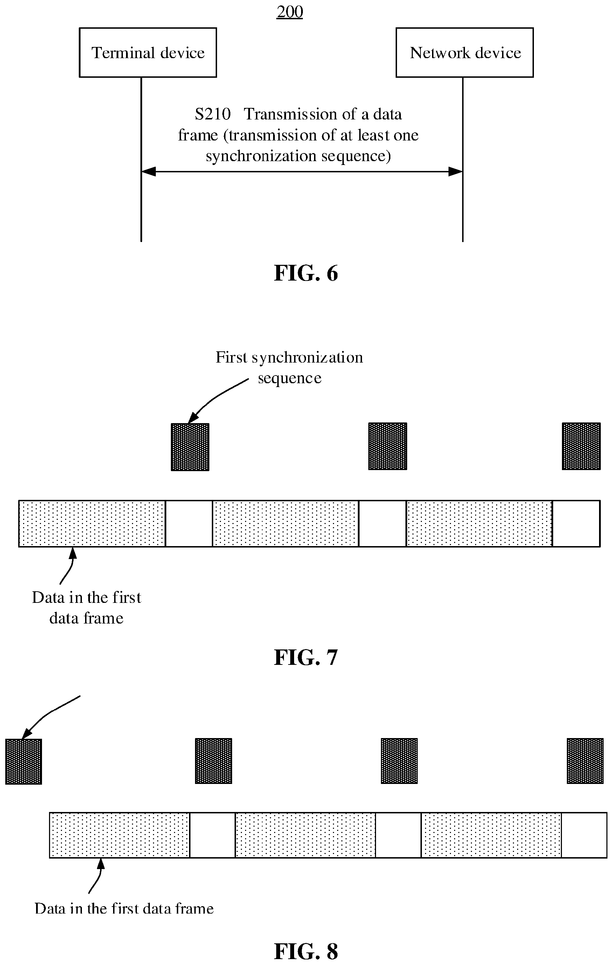

FIG. 6 is a schematic interactive diagram of a method 200 for wireless communication according to an embodiment of the present disclosure. As illustrated in FIG. 6, the method 200 including at least some of the following:
in S210, a terminal device transmits a data frame, herein at least one synchronization sequence is received during a process of transmitting the data frame.

Correspondingly, a network device sends at least one synchronization sequence during the process of transmitting the data frame. That is, the network device adds the transmission of one or more synchronization sequences to the transmission of the data frame.

In some embodiments, the data frame may refer to a data unit such as a transport block (TB), a data packet, etc.

In some embodiments, the terminal device is a zero-power consumption terminal, or other terminal with a lower clock accuracy.

In some embodiments, the terminal device obtains power through power harvesting for communication.

It should be understood that the present disclosure does not limit the specific ways in which the terminal device obtains power through power harvesting.

By way of example and not limitation, the terminal device may obtain power by wireless power supply ways such as RF signals, solar energy, pressure, or temperature.

In some embodiments, the RF signal may be considered as a power supply signal that is sent by a power supply device. The power supply device may be a network device or may also be a third party device, which may be a dedicated power supply node in a cell. The power supply device may continuously or intermittently send the power supply signal, so that the terminal device may carry out power harvesting. After obtaining sufficient power, the terminal device may perform corresponding communication processes, such as measurement, signal transmission, channel transmission, signal reception, channel reception, etc., and may also perform a process of information harvesting.

In some embodiments, the terminal device is provided with a power harvesting module used for power harvesting, such as the power harvesting for radio waves, solar energy, etc., and further storing the obtained power in a power storage unit. After obtaining enough power, the power storage unit may drive the chip circuit inside the terminal device to demodulate a signal in the forward link and modulate a signal in the reverse link.

It should be understood that embodiments of the present disclosure do not limit the specific ways in which the terminal device sends data to the network device. For example, the terminal device may communicate with the network device in a zero-power consumption communication way. The zero-power consumption communication way may include a back scattering communication way, or may also include other ways introduced in standard evolution for communication by a zero-power consumption terminal, but the present disclosure is not limited thereto.

It should be noted that, in embodiments of the present disclosure, when the terminal device communicates in the back scattering way and obtains power by harvesting an power supply signal, the power supply signal and a signal (or referred to as a carrier signal) used for the terminal device to generate the back scattering signal may be the same signal or different signals. The power supply signal and the carrier signal may be sent by the same device, or may be sent by different devices, and embodiments of the present disclosure are not limited thereto.

In some embodiments of the present disclosure, the at least one synchronization sequence is used for clock synchronization of the transmission of the data frame.

In some embodiments, the at least one synchronization sequence being received during the process of transmitting the data frame may include that:
the terminal device receives the at least one synchronization sequence at a starting position of data frame transmission, and/or

the terminal device receives the at least one synchronization sequence at a middle position of data frame transmission, i.e. receives the at least one synchronization sequence between to-be-transmitted data in the data frame.

Therefore, the terminal device may carry out clock synchronization based on the received synchronization sequence at the starting position of data frame transmission, and/or carry out clock synchronization based on the received synchronization sequence at the middle position of data frame transmission, which is beneficial to ensuring that the terminal device maintains more accurate timing during data frame transmission and improving data transmission performance.

It should be understood that embodiments of the present disclosure do not limit the number of the at least one synchronization sequence, which may be determined based on the synchronization capability of the terminal device.

In some embodiments of the present disclosure, the method 200 may further include that:
the terminal device reports synchronization capability information of the terminal device to the network device.

In some embodiments, the synchronization capability information of the terminal device is also referred to as clock synchronization capability information of the terminal device.

By way of example and not limitation, the synchronization capability information of the terminal device includes at least one of the following:
synchronization error information of the terminal device, or a maximum transmission duration corresponding to a maximum time error range (or a maximum synchronization error range) allowed by the terminal device.

Optionally, the synchronization error information of the terminal device may be a percentage of the synchronization error such as 5%, 8%, or a size of the synchronization error such as 0.05 ms, 0.08 ms.

Optionally, the maximum transmission duration corresponding to the maximum time error range allowed by the terminal device may refer to:
a maximum duration for transmitting data by the terminal device within the allowed maximum time error range, that is, when the transmission duration is longer than the maximum transmission duration, the time error will exceed the allowed maximum time error range.

In some embodiments of the present disclosure, S210 includes that:
the terminal device sends a first data frame, herein at least one first synchronization sequence is received during a process of sending the first data frame. That is, the first data frame is an uplink data frame.

Optionally, the at least one first synchronization sequence is used for clock synchronization of the transmission of the first data frame.

For example, as illustrated in FIG. 7, the terminal device may receive a first synchronization sequence at a middle position of sending the first data frame, carry out clock synchronization based on the first synchronization sequence after receiving the first synchronization sequence, and send unsent data in the first data frame after completing the clock synchronization.

For another example, as illustrated in FIG. 8, the terminal device firstly receives a first synchronization sequence at a starting position of the first data transmission, carries out clock synchronization based on the first synchronization sequence after receiving the first synchronization sequence, and starts to send data in the first data frame after completing the clock synchronization. Optionally, the terminal device may also receive the at least one first synchronization sequence at a middle position of the first data frame transmission.

Optionally, the at least one first synchronization sequence being received during the process of sending the first data frame may include that:
the at least one first synchronization sequence is received at a starting position of sending the first data frame, and/or
the at least one first synchronization sequence is received at a middle position of sending the first data frame.

For example, the terminal device may firstly receive a first synchronization sequence at the starting position of the first data frame transmission, carry out clock synchronization based on the first synchronization sequence, and further transmit the first data frame, and/or receive the first synchronization sequence at the middle position of the first data frame transmission, and carry out clock synchronization based on the first synchronization sequence, thereby transmitting the remaining unsent data in the first data frame, which is beneficial to ensuring that the terminal device maintains more accurate timing during the data frame transmission and improving data transmission performance.

In some embodiments, the method 200 further includes that:
the terminal device acquires configuration information of the at least one first synchronization sequence.

Further, the terminal device receives the at least one first synchronization sequence based on the configuration information of the at least one first synchronization sequence.

In some embodiments, the configuration information of the at least one first synchronization sequence is used to configure at least one of the following:
a position of the at least one first synchronization sequence in the process of sending the first data frame;
a time interval between two adjacent first synchronization sequences;
a number of the at least one first synchronization sequence; or
a length of the at least one first synchronization sequence.

In some embodiments, the position of the at least one first synchronization sequence in the process of sending the first data frame includes:
an initial position of the first synchronization sequence in the process of sending the first data frame; and/or
a middle position of the first synchronization sequence in the process of sending the first data frame.

In some implementations, the configuration information of the at least one first synchronization sequence is pre-configured information.

For example, configuration information of a synchronization sequence used for clock synchronization in the process of transmitting an uplink data frame may be stored in advance on a device (including a terminal device and a network device), so that the network device may send the synchronization sequence based on the configuration information when scheduling the terminal device to send the uplink data frame. Correspondingly, when the terminal device needs to send the uplink data frame, the synchronization sequence may be received based on the configuration information.

In other implementations, the configuration information of the at least one first synchronization sequence is configuration information of the network device.

For example, the network device may send the configuration information of the at least one first synchronization sequence by downlink signaling such as radio resource control (RRC) signaling, downlink control information (DCI), media access control (MAC) signaling, etc.

In some embodiments, the configuration information of the at least one first synchronization sequence is configured in first scheduling information, herein the first scheduling information is used to schedule the first data frame. That is, when scheduling the terminal device to send the uplink data frame, the network device may simultaneously indicate the configuration information of the synchronization sequence used for clock synchronization during the process of sending the uplink data frame.

Specifically, the network device schedules the terminal device to send the first data frame through the first scheduling information, and simultaneously indicates the configuration information of the at least one first synchronization sequence, then the network device may send the at least one first synchronization sequence based on the configuration information of the at least one first synchronization sequence. Correspondingly, the terminal device may receive the at least one first synchronization sequence based on the configuration information of the at least one first synchronization sequence, and further, carry out clock synchronization based on the at least one first synchronization sequence, so as to ensure that a more accurate timing is maintained during sending the first data frame.

In some embodiments, the configuration information of the at least one first synchronization sequence is determined based on synchronization capability information of the terminal device.

For example, the network device may determine the configuration information of the at least one first synchronization sequence, such as the number, length, position, etc. of the first synchronization sequence, based on synchronization capability information of the terminal device and the duration of the first data frame.

As an example, the maximum transmission duration corresponding to the maximum time error range allowed by the terminal device is 0.5 ms, that is, the terminal device may maintain an acceptable time deviation within 0.5 ms, and the duration of the first data frame is 2ms, then the network device may configure 3 first synchronization sequences, which are respectively set at positions of 0.5 ms, 1ms and 1.5 ms of the first data frame. That is, the network device sends a first synchronization sequence every 0.5 ms in the transmission of the first data frame.

As another example, the maximum transmission duration corresponding to the maximum time error range allowed by the terminal device is 1 ms, that is, the terminal device may maintain an acceptable time deviation within 1 ms, and the duration of the first data frame is 2ms, then the network device may configure 1 first synchronization sequence, which is set at a position of 1ms of the first data frame. That is, the network device sends a first synchronization sequence every 1 ms in the transmission of the first data frame.

As yet another example, a terminal with a stronger synchronization capability may be configured with a synchronization sequence having a shorter length, or a terminal with a weaker synchronization capability may be configured with a synchronization sequence having a longer length.

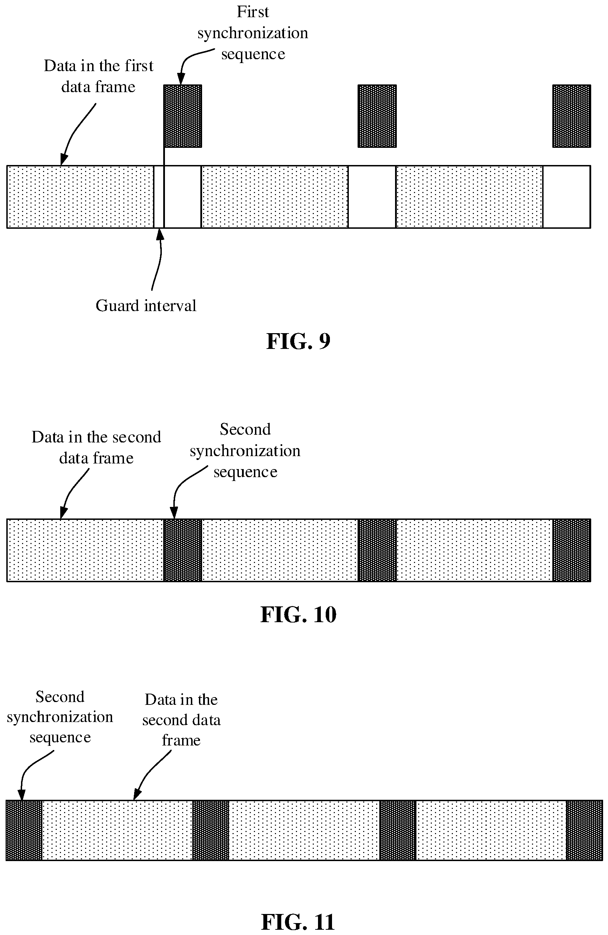

In some embodiments, as illustrated in FIG. 9, there is a first time interval between a time position corresponding to data in the first data frame and a time position corresponding to the first synchronization sequence.

By designing a certain time interval between the synchronization sequence and the to-be-sent data (or referred to as a guard interval, a guard time interval), processing time may be reserved for clock synchronization of the terminal device, which also prevents the to-be-sent data from shifting to the position of the synchronization sequence due to clock error before the terminal device has received the synchronization sequence.

Optionally, the first time interval is configured by the network device or pre-configured.

In other embodiments of the present disclosure, S210 includes that:
the terminal device receives a second data frame, herein at least one second synchronization sequence is received during a process of receiving the second data frame.

In some embodiments, the network device may add the at least one second synchronization sequence to to-be-sent data to obtain the second data frame.

Optionally, the at least one second synchronization sequence is used for clock synchronization of the transmission of the second data frame.

For example, as illustrated in FIG. 10, the terminal device may receive a second synchronization sequence at a middle position of receiving the second data frame, carry out clock synchronization based on the second synchronization sequence after receiving the second synchronization sequence, and receive unreceived data in the second data frame after completing the clock synchronization.

For another example, as illustrated in FIG. 11, the terminal device firstly receives a second synchronization sequence at a starting position of the second data transmission, carries out clock synchronization based on the second synchronization sequence after receiving the second synchronization sequence, and starts to receive data in the second data frame after completing the clock synchronization. Optionally, the terminal device may also receive the at least one second synchronization sequence at a middle position of the second data frame transmission.

Optionally, the at least one second synchronization sequence being received during the process of receiving the second data frame may include that:
the at least one second synchronization sequence is received at a starting position of receiving the second data frame, and/or
the at least one second synchronization sequence is received at a middle position of receiving the second data frame.

For example, the terminal device may firstly receive a second synchronization sequence at the starting position of the second data frame transmission, carry out clock synchronization based on the second synchronization sequence, and further transmit the second data frame, and/or receive the second synchronization sequence at the middle position of the second data frame transmission, and carry out clock synchronization based on the second synchronization sequence, thereby receiving the remaining unreceived data in the second data frame, which is beneficial to ensuring that the terminal device maintains more accurate timing during the data frame transmission and improving data transmission performance.

In some embodiments, the method 200 further includes that:
the terminal device acquires configuration information of the at least one second synchronization sequence.

Further, the terminal device receives the at least one second synchronization sequence based on the configuration information of the at least one second synchronization sequence.

In some embodiments, the configuration information of the at least one second synchronization sequence is used to configure at least one of the following:
a position of the at least one second synchronization sequence in the process of receiving the second data frame;
a time interval between two adjacent second synchronization sequences;
a number of the at least one second synchronization sequence; or
a length of the at least one second synchronization sequence.

In some embodiments, the position of the at least one second synchronization sequence in the process of receiving the second data frame includes:
an initial position of the second synchronization sequence in the process of receiving the second data frame; and/or
a middle position of the second synchronization sequence in the process of receiving the second data frame.

In some implementations, the configuration information of the at least one second synchronization sequence is pre-configured information.

For example, configuration information of a synchronization sequence used for clock synchronization in the process of transmitting a downlink data frame may be stored in advance on a device (including a terminal device and a network device), so that the network device may send the synchronization sequence based on the configuration information when scheduling the terminal device to receive the downlink data frame. Correspondingly, when the terminal device needs to receive the downlink data frame, the synchronization sequence may be received based on the configuration information.

In other implementations, the configuration information of the at least one second synchronization sequence is configuration information of the network device.

For example, the network device may configure the configuration information of the at least one second synchronization sequence by downlink signaling such as RRC signaling, DCI, MAC signaling, etc.

In some embodiments, the configuration information of the at least one second synchronization sequence may be configured in second scheduling information, herein the second scheduling information is used to schedule the second data frame. That is, when scheduling the transmission of the downlink data frame, the network device may simultaneously indicate the configuration information of the synchronization sequence used for clock synchronization during the process of receiving the downlink data frame.

Specifically, the network device schedules the terminal device to receive the second data frame through the second scheduling information, and simultaneously indicates the configuration information of the at least one second synchronization sequence, then the network device may send the at least one second synchronization sequence based on the configuration information of the at least one second synchronization sequence. Correspondingly, the terminal device may receive the at least one second synchronization sequence based on the configuration information of the at least one second synchronization sequence, and further, carry out clock synchronization based on the at least one second synchronization sequence, so as to ensure that a more accurate timing is maintained during receiving the second data frame.

In some embodiments, the configuration information of the at least one second synchronization sequence is determined based on synchronization capability information of the terminal device.

For example, the network device may determine the configuration information of the at least one second synchronization sequence, such as the number, length, position, etc. of the second synchronization sequence, based on synchronization capability information of the terminal device and the duration of the second data frame.

As an example, the maximum transmission duration corresponding to the maximum time error range allowed by the terminal device is 0.5 ms, that is, the terminal device may maintain an acceptable time deviation within 0.5 ms, and the duration of the second data frame is 2ms, then the network device may configure 3 second synchronization sequences, which are respectively set at positions of 0.5 ms, 1ms and 1.5 ms of the second data frame. That is, the network device sends a synchronization sequence every 0.5 ms in the transmission of the second data frame.

As yet another example, the maximum transmission duration corresponding to the maximum time error range allowed by the terminal device is 1 ms, that is, the terminal device may maintain an acceptable time deviation within 1 ms, and the duration of the second data frame is 2ms, then the network device may configure 1 second synchronization sequence, which is set at a position of 1ms of the second data frame. That is, the network device sends a synchronization sequence every 1 ms in the transmission of the second data frame.

As yet another example, a terminal with a stronger synchronization capability may be configured with a shorter length synchronization sequence, or a terminal with a weaker synchronization capability may be configured with a longer length synchronization sequence.

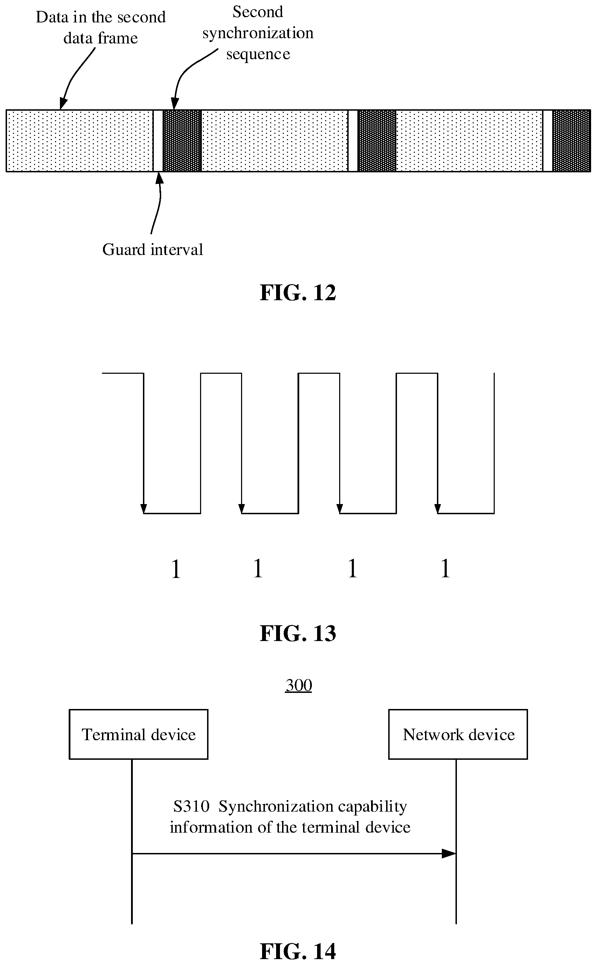

In some embodiments, as illustrated in FIG. 12, there is a first time interval between a time position corresponding to data in the second data frame and a time position corresponding to the second synchronization sequence.

By designing a certain time interval between the synchronization sequence and the to-be-received data (or referred to as a guard interval, a guard time interval), processing time may be reserved for clock synchronization of the terminal device, which also prevents the to-be-received data from shifting to the position of the synchronization sequence due to clock error before the terminal device receives the synchronization sequence.

Optionally, the second time interval is configured by the network device or pre-configured.

Due to the limited processing capacity of the terminal device, in some embodiments of the present disclosure, a sequence with lower complexity, such as periodic signals of all 0 or all 1, may be adopted as the synchronization sequence. The terminal device may extract accurate clock information by receiving a sequence with a certain length.

As an example, as illustrated in FIG. 13, a Manchester encoded sequence of all 1 may be adopted. As can be seen from FIG. 13, each number 1 has a regular falling edge, and the terminal device extracts effective clock information through time intervals between the falling edges of multiple numbers 1.

In a word, the network device adds the transmission of one or more synchronization sequences during the process of transmitting the data frame, so that the terminal device may carry out clock synchronization based on the one or more synchronization sequences during the process of transmitting the data frame, which is able to ensure that the terminal device maintains more accurate timing during the data frame transmission and improves transmission performance.

FIG. 14 is a schematic interactive diagram of another method for wireless communication provided by an embodiment of the present disclosure. As illustrated in FIG. 14, the method 300 including at least some of the following:
in S310, a terminal device reports synchronization capability information of the terminal device.

Correspondingly, a network device receives the synchronization capability information reported by the terminal device.

In some embodiments, the terminal device is a zero-power consumption terminal, or other terminal with a lower clock accuracy.

In some embodiments, the terminal device obtains power through power harvesting for communication.

It should be understood that the present disclosure does not limit the specific ways in which the terminal device obtains power through power harvesting.

By way of example and not limitation, the terminal device may obtain power by wireless power supply ways such as RF signals, solar energy, pressure, or temperature.

In some embodiments, the RF signal may be considered as a power supply signal that is sent by a power supply device. The power supply device may be a network device or may also be a third party device, which may be a dedicated power supply node in a cell. The power supply device may continuously or intermittently send the power supply signal, so that the terminal device may carry out power harvesting. After obtaining sufficient power, the terminal device may perform corresponding communication processes, such as measurement, signal transmission, channel transmission, signal reception, channel reception, etc., and may also perform a process of information harvesting.

In some embodiments, the terminal device is provided with a power harvesting module used for power harvesting, such as the power harvesting for radio waves, solar energy, etc., and further storing the obtained power in a power storage unit. After obtaining enough power, the power storage unit may drive the chip circuit inside the terminal device to demodulate a signal in the forward link and modulate a signal in the reverse link.

It should be understood that embodiments of the present disclosure do not limit the specific ways in which the terminal device sends data to the network device. For example, the terminal device may communicate with the network device in a zero-power consumption communication way. The zero-power consumption communication way may include a back scattering communication way, or may also include other ways introduced in standard evolution for communication by a zero-power consumption terminal, but the present disclosure is not limited thereto.

It should be noted that, in embodiments of the present disclosure, when the terminal device communicates in the back scattering way and obtains power by harvesting an power supply signal, the power supply signal and a signal (or referred to as a carrier signal) used for the terminal device to generate the back scattering signal may be the same signal or different signals. The power supply signal and the carrier signal may be sent by the same device, or may be sent by different devices, and embodiments of the present disclosure are not limited thereto.

In some embodiments, the synchronization capability information of the terminal device is also referred to as clock synchronization capability information of the terminal device.

By way of example and not limitation, the synchronization capability information of the terminal device includes at least one of the following:
synchronization error information of the terminal device, or a maximum transmission duration corresponding to a maximum time error range (or a maximum synchronization error range) allowed by the terminal device.

Optionally, the synchronization error information of the terminal device may be a percentage of the synchronization error such as 5%, 8%, or a size of the synchronization error such as 0.05 ms, 0.08 ms.

Optionally, the maximum transmission duration corresponding to the maximum time error range allowed by the terminal device may refer to:
a maximum duration for transmitting data by the terminal device within the allowed maximum time error range, that is, when the transmission duration is longer than the maximum transmission duration, the time error will exceed the allowed maximum time error range.

In some embodiments of the present disclosure, the synchronization capability information of the terminal device is used for the network device to determine a scheduling policy of the terminal device, or scheduling information of the terminal device.

In some embodiments, the synchronization capability information of the terminal device is used for the network device to determine first scheduling information of the terminal device, and the first scheduling information is used to schedule the terminal device to send a third data frame. That is, the network device may schedule the uplink transmission of the terminal device based on the synchronization capability information of the terminal device.

In some embodiments, the first scheduling information indicates a time length of the third data frame and/or first configuration information, and the first configuration information is used to configure synchronization sequence information used by the terminal device to send the third data frame.

By way of example and not limitation, the first configuration information is used to configure at least one of the following:
whether to receive a synchronization sequence during a process of sending the third data frame;
a position of a to-be-received synchronization sequence in the process of sending the third data frame;
a time interval between two adjacent synchronization sequences;
a number of the to-be-received synchronization sequence; or
a length of the to-be-received synchronization sequence.

Optionally, the position of the to-be-received synchronization sequence in the process of sending the third data frame includes:
an initial position of the to-be-received synchronization sequence in the process of sending the third data frame; and/or
a middle position of the to-be-received synchronization sequence in the process of sending the third data frame.

That is, the network device may schedule the terminal device to receive the synchronization sequence at the starting position and/or the middle position of the third data frame.

Optionally, the network device may determine the duration of the scheduled uplink data frame based on the synchronization capability information of the terminal device.

For example, the duration of the scheduled data frame is determined based on the maximum transmission duration corresponding to the maximum time error range allowed by the terminal device. For example, the duration of the scheduled data frame does not exceed the maximum transmission duration.

As an example, the maximum transmission duration corresponding to the maximum time error range allowed by the terminal device is 0.5ms, then the duration of the scheduled data frame does not exceed 0.5ms.

As an example, the maximum transmission duration corresponding to the maximum time error range allowed by the terminal device is 2ms, then the duration of the scheduled data frame does not exceed 2ms.

That is, for a terminal device with strong synchronization capability, a data frame with a longer duration may be scheduled, and for a terminal device with weak synchronization capability, a data frame with a shorter duration may be scheduled.

Optionally, the network device may determine the configuration information for receiving the synchronization sequence of the scheduled uplink data frame based on the synchronization capability information of the terminal device.

For example, for a terminal device with weak synchronization capability, the network device may configure the terminal device to receive one or more synchronization sequences during the process of sending the uplink data frame, and for a terminal device with strong synchronization capability, the network device may configure the terminal device not to receive the synchronization sequence during the process of sending the uplink data frame, or to receive a smaller number of synchronization sequences.

For another example, for a terminal device with weak synchronization capability, the network device may configure the terminal device to receive a synchronization sequence with a longer length during the process of sending the uplink data frame, and for a terminal device with strong synchronization capability, the network device may configure the terminal device to receive a synchronization sequence with a shorter length during the process of sending the uplink data frame.

In some embodiments, there is a third time interval between a time position corresponding to data in the third data frame and a time position corresponding to the to-be-received synchronization sequence, for example as illustrated in FIG. 9.

By designing a certain time interval between the synchronization sequence and the to-be-sent data (or referred to as a guard interval, a guard time interval), processing time may be reserved for clock synchronization of the terminal device, which also prevents the data from shifting to the position of the synchronization sequence due to clock error before the terminal device receives the synchronization sequence.

Optionally, the third time interval is configured by the network device or pre-configured.

In other embodiments, the synchronization capability information of the terminal device is used to determine second scheduling information of the terminal device, and the second scheduling information is used to schedule the terminal device to receive a fourth data frame. That is, the network device may schedule the downlink transmission of the terminal device based on the synchronization capability information of the terminal device.

In some embodiments, the second scheduling information indicates a time length of the fourth data frame and/or second configuration information, and the second configuration information is used to configure synchronization sequence information used by the terminal device to receive the fourth data frame.

By way of example and not limitation, the second configuration information is used to configure at least one of the following:
whether to receive a synchronization sequence during a process of receiving the fourth data frame;
a position of a to-be-received synchronization sequence in the process of receiving the fourth data frame;
a time interval between two adjacent synchronization sequences;
a number of the to-be-received synchronization sequence; or
a length of the to-be-received synchronization sequence.

In some embodiments, the position of the to-be-received synchronization sequence in the process of receiving the fourth data frame includes:
an initial position of the to-be-received synchronization sequence in the process of receiving the fourth data frame; and/or
a middle position of the to-be-received synchronization sequence in the process of receiving the fourth data frame.

That is, the network device may schedule the terminal device to receive the synchronization sequence at the starting position and/or the middle position of the fourth data frame.

Optionally, the network device may determine the duration of the scheduled downlink data frame based on the synchronization capability information of the terminal device.

For example, for a terminal device with strong synchronization capability, a data frame with a longer duration may be scheduled, and for a terminal device with weak synchronization capability, a data frame with a shorter duration may be scheduled.

Optionally, the network device may determine the configuration information for receiving the synchronization sequence of the scheduled downlink data frame based on the synchronization capability information of the terminal device.

For example, for a terminal device with weak synchronization capability, the network device may configure the terminal device to receive one or more synchronization sequences during the process of receiving the downlink data frame, and for a terminal device with strong synchronization capability, the network device may configure the terminal device not to receive the synchronization sequence during the process of receiving the downlink data frame, or to receive a smaller number of synchronization sequences.

For another example, for a terminal device with weak synchronization capability, the network device may configure the terminal device to receive a synchronization sequence with a longer length during the process of receiving the downlink data frame, and for a terminal device with strong synchronization capability, the network device may configure the terminal device to receive a synchronization sequence with a shorter length during the process of receiving the downlink data frame.

In some embodiments, there is a third time interval between a time position corresponding to data in the fourth data frame and a time position corresponding to the to-be-received synchronization sequence, for example as illustrated in FIG. 12.

By designing a certain time interval between the synchronization sequence and the to-be-received data (or referred to as a guard interval, a guard time interval), processing time may be reserved for clock synchronization of the terminal device, which also prevents the data from shifting to the position of the synchronization sequence due to clock error before the terminal device receives the synchronization sequence.

Due to the limited processing capacity of the terminal device, in some embodiments of the present disclosure, a sequence with lower complexity, such as periodic signals of all 0 or all 1, may be adopted as the synchronization sequence. The terminal device may extract accurate clock information by receiving a sequence with a certain length.

As an example, as illustrated in FIG. 13, a Manchester encoded sequence of all 1 may be adopted. As can be seen from FIG. 13, each number 1 has a regular falling edge, and the terminal device extracts effective clock information through time intervals between the falling edges of multiple numbers 1.

In a word, by the terminal device reporting the synchronization capability information, the network device may schedule the terminal device based on the synchronization capability information of the terminal device, for example, the terminal device is scheduled to carry out transmission whose duration does not exceed the maximum transmission duration, or the terminal device is scheduled to receive at least one synchronization sequence during transmitting the data frame, etc., which is beneficial to ensuring that the terminal device maintains more accurate timing during data transmission and improving transmission performance.

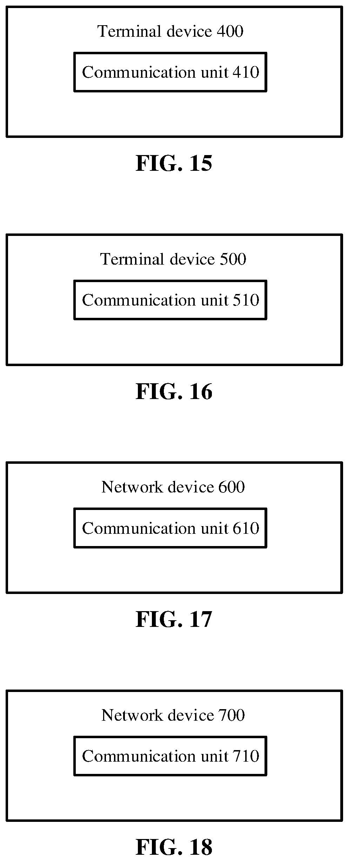

The method embodiments of the present disclosure are described in detail above in conjunction with FIGS. 6 to 14, and the apparatus embodiments of the present disclosure are described in detail below in conjunction with FIGS. 15 to 21. It should be understood that the apparatus embodiments and the method embodiments correspond to each other, and similar descriptions may refer to the method embodiments.

FIG. 15 illustrates a schematic block diagram of a terminal device 400 according to an embodiment of the present disclosure. As illustrated in FIG. 15, the terminal device 400 includes:

a communication unit 410, which is used to transmit a data frame, herein at least one synchronization sequence is received during a process of transmitting the data frame.

In some embodiments of the present disclosure, the communication unit 410 is further used to:
send a first data frame, herein at least one first synchronization sequence is received during a process of sending the first data frame.

In some embodiments of the present disclosure, the terminal device further includes:
an acquiring unit, which is used to acquire configuration information of the at least one first synchronization sequence.

In some embodiments of the present disclosure, the configuration information of the at least one first synchronization sequence is used to configure at least one of the following:
a position of the at least one first synchronization sequence in the process of sending the first data frame;
a number of the at least one first synchronization sequence; or
a length of the at least one first synchronization sequence.

In some embodiments of the present disclosure, the position of the at least one first synchronization sequence in the process of sending the first data frame includes:
an initial position of the first synchronization sequence in the process of sending the first data frame; and/or
a middle position of the first synchronization sequence in the process of sending the first data frame.

In some embodiments of the present disclosure, the configuration information of the at least one first synchronization sequence is configured by the network device or pre-configured.

In some embodiments of the present disclosure, the configuration information of the at least one first synchronization sequence is sent by the network device through first scheduling information, herein the first scheduling information is used to schedule the first data frame.

In some embodiments of the present disclosure, the configuration information of the at least one first synchronization sequence is determined based on synchronization capability of the terminal device.

In some embodiments of the present disclosure, there is a first time interval between a time position corresponding to data in the first data frame and a time position corresponding to the first synchronization sequence.

In some embodiments of the present disclosure, the first time interval is configured by the network device or pre-configured.

In some embodiments of the present disclosure, the communication unit 410 is further used to:
receive a second data frame, herein at least one second synchronization sequence is received during a process of receiving the second data frame.

In some embodiments of the present disclosure, the terminal device further includes:
an acquiring unit, which is used to acquire configuration information of the at least one second synchronization sequence.

In some embodiments of the present disclosure, the configuration information of the at least one second synchronization sequence is used to configure at least one of the following:
a position of the at least one second synchronization sequence in the process of receiving the second data frame;
a number of the at least one second synchronization sequence; or
a length of the at least one second synchronization sequence.

In some embodiments of the present disclosure, the position of the at least one second synchronization sequence in the process of receiving the second data frame includes:
an initial position of the second synchronization sequence in the process of receiving the second data frame; and/or
a middle position of the second synchronization sequence in the process of receiving the second data frame.

In some embodiments of the present disclosure, the configuration information of the at least one second synchronization sequence is configured by the network device or pre-configured.

In some embodiments of the present disclosure, the configuration information of the at least one second synchronization sequence is determined based on synchronization capability of the terminal device.

In some embodiments of the present disclosure, there is a second time interval between a time position corresponding to data in the second data frame and a time position corresponding to the second synchronization sequence.

In some embodiments of the present disclosure, the second time interval is configured by the network device or pre-configured.

In some embodiments of the present disclosure, the communication unit 410 is further used to:
report synchronization capability information of the terminal device.

In some embodiments of the present disclosure, the synchronization capability information of the terminal device includes at least one of the following:
synchronization error information of the terminal device, or a maximum transmission duration corresponding to a maximum time error range allowed by the terminal device.

In some embodiments of the present disclosure, the terminal device obtains power for transmission through power harvesting.

Optionally, in some embodiments, the above communication unit may be a communication interface, a transceiver, or an input-output interface of a communication chip or a system-on-chip. The above acquiring unit may be one or more processors.

It should be understood that the terminal device 400 according to embodiments of the present disclosure may correspond to the terminal device in the method embodiments of the present disclosure, and the above and other operations and/or functions of respective units in the terminal device 400 are used to implement the corresponding flows of the terminal device in the method 200 illustrated in FIGS. 6 to 13, and will not be repeated here for the sake of brevity.

FIG. 16 illustrates a schematic block diagram of a terminal device 500 according to an embodiment of the present disclosure. As illustrated in FIG. 16, the terminal device 500 includes: a communication unit 510, which is used to report synchronization capability information of the terminal device.

In some embodiments of the present disclosure, the synchronization capability information of the terminal device includes at least one of the following:
synchronization error information of the terminal device, or a maximum transmission duration corresponding to a maximum time error range allowed by the terminal device.

In some embodiments of the present disclosure, the synchronization capability information of the terminal device is used to determine scheduling information of the terminal device.

In some embodiments of the present disclosure, the synchronization capability information of the terminal device is used to determine first scheduling information of the terminal device, and the first scheduling information is used to schedule the terminal device to send a third data frame.

In some embodiments of the present disclosure, the first scheduling information indicates a time length of the third data frame and/or first configuration information, and the first configuration information is used to configure synchronization sequence information used by the terminal device to send the third data frame.

In some embodiments of the present disclosure, the first configuration information is used to configure at least one of the following:
whether to receive a synchronization sequence during a process of sending the third data frame;
a position of a to-be-received synchronization sequence in the process of sending the third data frame;
a number of the to-be-received synchronization sequence; or
a length of the to-be-received synchronization sequence.

In some embodiments of the present disclosure, the position of the to-be-received synchronization sequence in the process of sending the third data frame includes:
an initial position of the to-be-received synchronization sequence in the process of sending the third data frame; and/or
a middle position of the to-be-received synchronization sequence in the process of sending the third data frame.

In some embodiments of the present disclosure, there is a third time interval between a time position corresponding to data in the third data frame and a time position corresponding to the to-be-received synchronization sequence.

In some embodiments of the present disclosure, the third time interval is configured by the network device or pre-configured.

In some embodiments of the present disclosure, the synchronization capability information of the terminal device is used to determine second scheduling information of the terminal device, and the second scheduling information is used to schedule the terminal device to receive a fourth data frame.

In some embodiments of the present disclosure, the second scheduling information indicates a time length of the fourth data frame and/or second configuration information, and the second configuration information is used to configure synchronization sequence information used by the terminal device to receive the fourth data frame.

In some embodiments of the present disclosure, the second configuration information is used to configure at least one of the following:
whether to receive a synchronization sequence during a process of receiving the fourth data frame;
a position of a to-be-received synchronization sequence in the process of receiving the fourth data frame;
a number of the to-be-received synchronization sequence; or
a length of the to-be-received synchronization sequence.

In some embodiments of the present disclosure, the position of the to-be-received synchronization sequence in the process of receiving the fourth data frame includes:
an initial position of the to-be-received synchronization sequence in the process of receiving the fourth data frame; and/or
a middle position of the to-be-received synchronization sequence in the process of receiving the fourth data frame.

In some embodiments of the present disclosure, there is a fourth time interval between a time position corresponding to data in the fourth data frame and a time position corresponding to the to-be-received synchronization sequence.

In some embodiments of the present disclosure, the fourth time interval is configured by the network device or pre-configured.

In some embodiments of the present disclosure, the terminal device obtains power for data transmission through power harvesting.

Optionally, in some embodiments, the above communication unit may be a communication interface, a transceiver, or an input-output interface of a communication chip or a system-on-chip. The above processing unit may be one or more processors.

It should be understood that the terminal device 500 according to embodiments of the present disclosure may correspond to the terminal device in the method embodiments of the present disclosure, and the above and other operations and/or functions of respective units in the terminal device 500 are used to implement the corresponding flows of the terminal device in the method 200 illustrated in FIG. 14, and will not be repeated here for the sake of brevity.

FIG. 17 is a schematic block diagram of a network device according to an embodiment of the present disclosure. The network device 600 of FIG. 17 includes:
a communication unit 610, which is used to send at least one synchronization sequence during a process of transmitting a data frame.

In some embodiments of the present disclosure, the communication unit 610 is further used to:
send at least one first synchronization sequence during a process of receiving a first data frame.

In some embodiments of the present disclosure, the communication unit 610 is further used to:
send configuration information of the at least one first synchronization sequence.

In some embodiments of the present disclosure, the configuration information of the at least one first synchronization sequence is used to configure at least one of the following:
a position of the at least one first synchronization sequence in the process of sending the first data frame;
a number of the at least one first synchronization sequence; or
a length of the at least one first synchronization sequence.

In some embodiments of the present disclosure, the position of the at least one first synchronization sequence in the process of sending the first data frame includes:
an initial position of the first synchronization sequence in the process of sending the first data frame; and/or
a middle position of the first synchronization sequence in the process of sending the first data frame.

In some embodiments of the present disclosure, the configuration information of the at least one first synchronization sequence is sent by the network device through first scheduling information, herein the first scheduling information is used to schedule the first data frame.

In some embodiments of the present disclosure, the configuration information of the at least one first synchronization sequence is determined based on synchronization capability of the terminal device.

In some embodiments of the present disclosure, there is a first time interval between a time position corresponding to data in the first data frame and a time position corresponding to the first synchronization sequence.

In some embodiments of the present disclosure, the first time interval is configured by the network device or pre-configured.

In some embodiments of the present disclosure, the communication unit 610 is further used to:
send a second data frame, herein the second data frame includes at least one second synchronization sequence.

In some embodiments of the present disclosure, the communication unit 610 is further used to:
send configuration information of the at least one second synchronization sequence.

In some embodiments of the present disclosure, the configuration information of the at least one second synchronization sequence is used to configure at least one of the following:
a position of the at least one second synchronization sequence in the process of receiving the second data frame;
a number of the at least one second synchronization sequence; or
a length of the at least one second synchronization sequence.

In some embodiments of the present disclosure, the position of the at least one second synchronization sequence in the process of receiving the second data frame includes:
an initial position of the second synchronization sequence in the process of receiving the second data frame; and/or
a middle position of the second synchronization sequence in the process of receiving the second data frame.

In some embodiments of the present disclosure, the configuration information of the at least one second synchronization sequence is determined based on synchronization capability of the terminal device.

In some embodiments of the present disclosure, there is a second time interval between a time position corresponding to data in the second data frame and a time position corresponding to the second synchronization sequence.

In some embodiments of the present disclosure, the second time interval is configured by the network device or pre-configured.

In some embodiments of the present disclosure, the communication unit 610 is further used to: receive synchronization capability information of the terminal device.

In some embodiments of the present disclosure, the synchronization capability information of the terminal device includes at least one of the following:
synchronization error information of the terminal device, or a maximum transmission duration corresponding to a maximum time error range allowed by the terminal device.

Optionally, in some embodiments, the above communication unit may be a communication interface, a transceiver, or an input-output interface of a communication chip or a system-on-chip. The above processing unit may be one or more processors.

It should be understood that the network device 600 according to embodiments of the present disclosure may correspond to the network device in the method embodiments of the present disclosure, and the above and other operations and/or functions of respective units in the network device 600 are used to implement the corresponding flows of the network device in the method illustrated in FIGS. 6 to 13, and will not be repeated here for the sake of brevity.

FIG. 18 is a schematic block diagram of a network device according to an embodiment of the present disclosure. The network device 700 of FIG. 18 includes:
a communication unit 710, which is used to receive synchronization capability information of a terminal device.

In some embodiments of the present disclosure, the synchronization capability information of the terminal device includes at least one of the following:
synchronization error information of the terminal device, or a maximum transmission duration corresponding to a maximum time error range allowed by the terminal device.

In some embodiments of the present disclosure, the synchronization capability information of the terminal device is used for the network device to determine scheduling information of the terminal device.

In some embodiments of the present disclosure, the synchronization capability information of the terminal device is used for the network device to determine first scheduling information of the terminal device, and the first scheduling information is used to schedule the terminal device to send a third data frame.

In some embodiments of the present disclosure, the first scheduling information indicates a time length of the third data frame and/or first configuration information, and the first configuration information is used to configure synchronization sequence information used by the terminal device to send the third data frame.

In some embodiments of the present disclosure, the first configuration information is used to configure at least one of the following:
whether to receive a synchronization sequence during a process of sending the third data frame;
a position of a to-be-received synchronization sequence in the process of sending the third data frame;
a number of the to-be-received synchronization sequence; or
a length of the to-be-received synchronization sequence.

In some embodiments of the present disclosure, the position of the to-be-received synchronization sequence in the process of sending the third data frame includes:
an initial position of the to-be-received synchronization sequence in the process of sending the third data frame; and/or
a middle position of the to-be-received synchronization sequence in the process of sending the third data frame.

In some embodiments of the present disclosure, there is a third time interval between a time position corresponding to data in the third data frame and a time position corresponding to the to-be-received synchronization sequence.

In some embodiments of the present disclosure, the third time interval is configured by the network device or pre-configured.

In some embodiments of the present disclosure, the synchronization capability information of the terminal device is used for the network device to determine second scheduling information of the terminal device, and the second scheduling information is used to schedule the terminal device to receive a fourth data frame.

In some embodiments of the present disclosure, the second scheduling information indicates a time length of the fourth data frame and/or second configuration information, and the second configuration information is used to configure synchronization sequence information used by the terminal device to receive the fourth data frame.

In some embodiments of the present disclosure, the second configuration information is used to configure at least one of the following:
whether to receive a synchronization sequence during a process of receiving the fourth data frame;
a position of a to-be-received synchronization sequence in the process of receiving the fourth data frame;
a number of the to-be-received synchronization sequence; or
a length of the to-be-received synchronization sequence.

In some embodiments of the present disclosure, the position of the to-be-received synchronization sequence in the process of receiving the fourth data frame includes:
an initial position of the to-be-received synchronization sequence in the process of receiving the fourth data frame; and/or
a middle position of the to-be-received synchronization sequence in the process of receiving the fourth data frame.

In some embodiments of the present disclosure, there is a fourth time interval between a time position corresponding to data in the fourth data frame and a time position corresponding to the to-be-received synchronization sequence.

In some embodiments of the present disclosure, the fourth time interval is configured by the network device or pre-configured.

In some embodiments of the present disclosure, the terminal device obtains power for data transmission through power harvesting.

Optionally, in some embodiments, the above communication unit may be a communication interface, a transceiver, or an input-output interface of a communication chip or a system-on-chip. The above processing unit may be one or more processors.

It should be understood that the network device 700 according to embodiments of the present disclosure may correspond to the network device in the method embodiments of the present disclosure, and the above and other operations and/or functions of respective units in the network device 700 are used to implement the corresponding flows of the network device in the method illustrated in FIG. 14, and will not be repeated here for the sake of brevity.

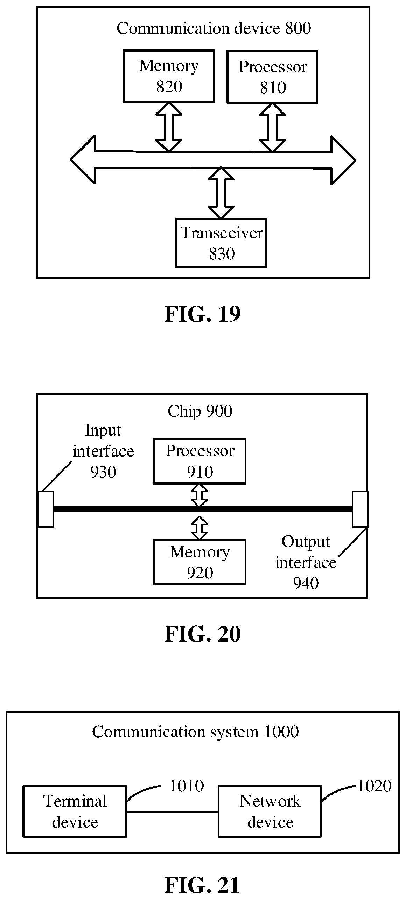

FIG. 19 is a schematic structural diagram of a communication device 800 provided by an embodiment of the present disclosure. The communication device 800 illustrated in FIG. 19 includes a processor 810, and the processor 810 may invoke and run a computer program from a memory to implement the method in embodiments of the present disclosure.

Optionally, as illustrated in FIG. 19, the communication device 800 may further include a memory 820. Herein, the processor 810 may invoke and run a computer program from the memory 820 to implement the method in embodiments of the present disclosure.

Herein, the memory 820 may be a separate device independent of the processor 810, or may be integrated into the processor 810.

Optionally, as illustrated in FIG. 19, the communication device 800 may further include a transceiver 830, the processor 810 may control the transceiver 830 to communicate with other devices, and specifically, may send information or data to other devices, or receive information or data sent from other devices.

Herein, the transceiver 830 may include a transmitter and a receiver. The transceiver 830 may further include antennas, the number of which may be one or more.

Optionally, the communication device 800 may specifically be the network device of embodiments of the present disclosure, and the communication device 800 may implement the corresponding flows implemented by the network device in various methods of embodiments of the present disclosure, and will not be repeated here for the sake of brevity.

Optionally, the communication device 800 may specifically be the mobile terminal/terminal device of embodiments of the present disclosure, and the communication device 800 may implement the corresponding flows implemented by the mobile terminal/terminal device in various methods of embodiments of the present disclosure, and will not be repeated here for the sake of brevity.

FIG. 20 is a schematic structural diagram of a chip of an embodiment of the present disclosure. The chip 900 illustrated in FIG. 20 includes a processor 910, and the processor 910 may invoke and run a computer program from a memory to implement the method in embodiments of the present disclosure.

Optionally, as illustrated in FIG. 20, the chip 900 may further include a memory 920. Herein, the processor 910 may invoke and run a computer program from the memory 920 to implement the method in embodiments of the present disclosure.

Herein, the memory 920 may be a separate device independent of the processor 910, or may be integrated into the processor 910.

Optionally, the chip 900 may further include an input interface 930. Herein, the processor 910 may control the input interface 930 to communicate with other devices or chips, and specifically, may acquire information or data sent from other devices or chips.

Optionally, the chip 900 may further include an output interface 940. Herein, the processor 910 may control the output interface 940 to communicate with other devices or chips, and specifically, may output information or data to other devices or chips.

Optionally, the chip may be applied to the network device of embodiments of the present disclosure, and the chip may implement the corresponding flows implemented by the network device in various methods of embodiments of the present disclosure, and will not repeated herein for the sake of brevity.

Optionally, the chip may be applied to the mobile terminal/terminal device of embodiments of the present disclosure, and the chip may implement the corresponding flows implemented by the mobile terminal/terminal device in various methods of embodiments of the present disclosure, and will not repeated herein for the sake of brevity.

It should be understood that the chip referred to in embodiments of the present disclosure may also be referred to as a system level chip, a system on chip, a chip system, or a system on a chip, etc.

FIG. 21 is a schematic block diagram of a communication system 1000 provided by an embodiment of the present disclosure. As illustrated in FIG. 21, the communication system 1000 includes a terminal device 1010 and a network device 1020.

Herein, the terminal device 1010 may be used to implement the corresponding functions implemented by the terminal device in the above method, and the network device 1020 may be used to implement the corresponding functions implemented by the network device in the above method, and will not be repeated herein for the sake of brevity.

It should be understood that the processor of embodiments of the present disclosure may be an integrated circuit chip with signal processing capability. In implementation, the respective steps of the above method embodiments may be accomplished by integrated logic circuits of hardware in the processor or by instructions in the form of software. The above processor may be a general purpose processor, a digital signal processor (DSP), an application specific integrated circuit (ASIC), a field programmable gate array (FPGA) or other programmable logic devices, a discrete gate or a transistor logic device, a discrete hardware component. The various methods, steps and logic diagrams disclosed in embodiments of the present disclosure may be implemented or performed. The general purpose processor may be a microprocessor, or the processor may be any conventional processor or the like. The steps of the method disclosed in combination with embodiments of the present disclosure may be directly embodied as being performed by a hardware decoding processor or a combination of the hardware and software modules in the decoding processor. The software module may be located in random access memory (RAM), flash memory, read-only memory (ROM), programmable ROM (PROM), or electrically erasable programmable memory, registers and other storage medium mature in the art. The storage medium is located in the memory, and the processor reads the information in the memory and completes the steps in the above methods in conjunction with its hardware.

It can be understood that the memory in embodiments of the present disclosure may be volatile memory or non-volatile memory or may include both volatile and non-volatile memory. Herein, the nonvolatile memory may be ROM, PROM, erasable PROM (EPROM), electrically EPROM (EEPROM), or flash memory. The volatile memory may be a RAM which serves as an external cache. By way of illustration, but not limitation, many forms of RAM are available, such as static RAM (SRAM), dynamic RAM (DRAM), synchronous DRAM (SDRAM), double data rate SDRAM (DDR SDRAM), enhanced SDRAM (ESDRAM), synchlink DRAM (SLDRAM), and direct rambus RAM (DR RAM). It should be noted that the memory of the system and method described in the present disclosure is intended to include but not to limit these and any other suitable types of memory.

It should be understood that the memory described above is exemplary, but not limiting. For example, the memory in embodiments of the present disclosure may also be SRAM, DRAM, SDRAM, DDR SDRAM, ESDRAM, SLDRAM, and DR RAM, etc. That is to say, the memory in embodiments of the present disclosure is intended to include but not limited to these and any other suitable types of memory.

Embodiments of the present disclosure also provide a computer-readable storage medium for storing computer programs.

Optionally, the computer-readable storage medium may be applied to the network device in embodiments of the present disclosure, and the computer program causes a computer to perform the corresponding flows implemented by the network device in various methods of embodiments of the present disclosure, and will not repeated herein for the sake of brevity.

Optionally, the computer-readable storage medium may be applied to the mobile terminal/terminal device in embodiments of the present disclosure, and the computer program causes the computer to perform the corresponding flows implemented by the mobile terminal/terminal device in various methods of embodiments of the present disclosure, and will not repeated herein for the sake of brevity.

Embodiments of the present disclosure further provide a computer program product, which includes computer program instructions.

Optionally, the computer program product may be applied to the network device in embodiments of the present disclosure, and the computer program instructions cause the computer to perform the corresponding flows implemented by the network device in various methods of embodiments of the present disclosure, and will not repeated herein for the sake of brevity.

Optionally, the computer program product may be applied to the mobile terminal/terminal device in embodiments of the present disclosure, and the computer program instructions cause the computer to perform the corresponding flows implemented by the mobile terminal/terminal device in various methods of embodiments of the present disclosure, and will not repeated herein for the sake of brevity.

Embodiments of the present disclosure further provide a computer program.

Optionally, the computer program may be applied to the network device in embodiments of the present disclosure, and when running on the computer, the computer program causes the computer to perform the corresponding flows implemented by the network device in various methods of embodiments of the present disclosure, and will not repeated herein for the sake of brevity.

Optionally, the computer program may be applied to the mobile terminal/terminal device in embodiments of the present disclosure, and when running on the computer, the computer program causes the computer to perform the corresponding flows implemented by the mobile terminal/terminal device in various methods of embodiments of the present disclosure, and will not repeated herein for the sake of brevity.

Those skilled in the art will appreciate that the various example units and algorithm steps described in conjunction with embodiments disclosed in the present disclosure can be implemented in electronic hardware or a combination of computer software and electronic hardware. Whether these functions are performed in the hardware or software form depends on the specific application and design constraints of the technical solution. Those skilled in the art may use different methods for each specific application to implement the described function, but such implementation should not be considered beyond the scope of the present disclosure.

Those skilled in the art will clearly appreciate that, for convenience and brevity of description, specific operating processes of the above-described systems, apparatuses, and units may refer to corresponding processes in the foregoing method embodiments, and will not be repeated herein.

In several embodiments provided by the present disclosure, it should be understood that the disclosed systems, apparatuses and methods may be implemented in other ways. For example, the above-described apparatus embodiments are only exemplary. For example, the partition of units is only a logical functional partition, which may be implemented in another way, for example, multiple units or components may be combined or integrated into another system, or some features may be ignored or not performed. On the other hand, the coupling, direct coupling or communication connection between each other shown or discussed above may be indirect coupling or communication connection through some interfaces, devices or units, and may be electrical, mechanical or other form.

The units illustrated as separate components may or may not be physically separated, and components displayed as units may or may not be physical units, i.e. may be located in one place, or may be distributed over multiple network units. Some or all of the units may be selected according to actual needs to achieve the object of embodiments of the present disclosure.

In addition, each functional unit in each embodiment of the present disclosure may be integrated in one processing unit, each unit may exist physically alone, or two or more units may be integrated in one unit.

The functions may be stored in a computer readable storage medium if implemented in the form of software functional units and sold or used as independent products. Based on such understanding, the technical solution of the present disclosure, in essence or a part contributing to the prior art, or a part of the technical solution, may be embodied in the form of a software product. The computer program product is stored in a storage medium and includes several instructions for causing a computer device (which may be a personal computer, server, or network device, etc.) to perform all or part of the steps of the method of respective embodiments of the present disclosure. The aforementioned storage medium includes various mediums capable of storing program codes such as U disk, mobile hard disk, ROM, RAM, magnetic disk or optical disk.

The above-mentioned is only the specific implementation of the present disclosure, but the scope of protection of the present disclosure is not limited thereto. Any changes or substitutions may be easily think of by those skilled familiar with the art within the technical scope disclosed by the present disclosure, should be covered within the scope of protection of the present disclosure. Therefore, the scope of protection of the present disclosure shall be subject to the scope of protection of the claims.

## Claims

1. A method for wireless communication, comprising:
transmitting, by a terminal device, a data frame, wherein at least one synchronization sequence is received during a process of transmitting the data frame.

2. The method of claim 1, wherein transmitting, by the terminal device, the data frame comprises:
sending, by the terminal device, a first data frame, wherein at least one first synchronization sequence is received during a process of sending the first data frame.

3. The method of claim 2, further comprising:
acquiring, by the terminal device, configuration information of the at least one first synchronization sequence.

4. The method of claim 3, wherein the configuration information of the at least one first synchronization sequence is used to configure at least one of the following:
a position of the at least one first synchronization sequence in the process of sending the first data frame;
a number of the at least one first synchronization sequence; or
a length of the at least one first synchronization sequence.

5. The method of claim 4, wherein the position of the at least one first synchronization sequence in the process of sending the first data frame comprises:
an initial position of the first synchronization sequence in the process of sending the first data frame; and/or
a middle position of the first synchronization sequence in the process of sending the first data frame.

6. The method of any one of claims 3-5, wherein the configuration information of the at least one first synchronization sequence is configured by a network device or pre-configured.

7. The method of any one of claims 4-6, wherein the configuration information of the at least one first synchronization sequence is sent by a network device through first scheduling information, and the first scheduling information is used to schedule the first data frame.

8. The method of claim 7, wherein the configuration information of the at least one first synchronization sequence is determined based on a synchronization capability of the terminal device.

9. The method of any one of claims 2-8, wherein there is a first time interval between a time position corresponding to data in the first data frame and a time position corresponding to the first synchronization sequence.

10. The method of claim 9, wherein the first time interval is configured by a network device or pre-configured.

11. The method of any one of claims 1-10, wherein transmitting, by the terminal device, the data frame comprises:
receiving, by the terminal device, a second data frame, wherein at least one second synchronization sequence is received during a process of receiving the second data frame.

12. The method of claim 11, further comprising:
acquiring, by the terminal device, configuration information of the at least one second synchronization sequence.

13. The method of claim 12, wherein the configuration information of the at least one second synchronization sequence is used to configure at least one of the following:
a position of the at least one second synchronization sequence in the process of receiving the second data frame;
a number of the at least one second synchronization sequence; or
a length of the at least one second synchronization sequence.

14. The method of claim 13, wherein the position of the at least one second synchronization sequence in the process of receiving the second data frame comprises:
an initial position of the second synchronization sequence in the process of receiving the second data frame; and/or
a middle position of the second synchronization sequence in the process of receiving the second data frame.

15. The method of any one of claims 12-14, wherein the configuration information of the at least one second synchronization sequence is configured by a network device or pre-configured.

16. The method of any one of claims 12-15, wherein the configuration information of the at least one second synchronization sequence is determined based on a synchronization capability of the terminal device.

17. The method of any one of claims 11-16, wherein there is a second time interval between a time position corresponding to data in the second data frame and a time position corresponding to the second synchronization sequence.

18. The method of claim 17, wherein the second time interval is configured by a network device or pre-configured.

19. The method of any one of claims 1-18, further comprising:
reporting, by the terminal device, synchronization capability information of the terminal device.

20. The method of claim 19, wherein the synchronization capability information of the terminal device comprises at least one of the following:
synchronization error information of the terminal device, or a maximum transmission duration corresponding to a maximum time error range allowed by the terminal device.

21. The method of any one of claims 1-20, wherein the terminal device obtains power for transmission through power harvesting.

22. A method for wireless communication, comprising:
reporting, by a terminal device, synchronization capability information of the terminal device.

23. The method of claim 22, wherein the synchronization capability information of the terminal device comprises at least one of the following:
synchronization error information of the terminal device, or a maximum transmission duration corresponding to a maximum time error range allowed by the terminal device.

24. The method of claim 22 or 23, wherein the synchronization capability information of the terminal device is used to determine scheduling information of the terminal device.

25. The method of claim 24, wherein the synchronization capability information of the terminal device is used to determine first scheduling information of the terminal device, and the first scheduling information is used to schedule the terminal device to send a third data frame.

26. The method of claim 25, wherein the first scheduling information indicates a time length of the third data frame and/or first configuration information, and the first configuration information is used to configure synchronization sequence information used by the terminal device to send the third data frame.

27. The method of claim 26, wherein the first configuration information is used to configure at least one of the following:
whether to receive a synchronization sequence during a process of sending the third data frame;
a position of a to-be-received synchronization sequence in the process of sending the third data frame;
a number of the to-be-received synchronization sequence; or
a length of the to-be-received synchronization sequence.

28. The method of claim 27, wherein the position of the to-be-received synchronization sequence in the process of sending the third data frame comprises:
an initial position of the to-be-received synchronization sequence in the process of sending the third data frame; and/or
a middle position of the to-be-received synchronization sequence in the process of sending the third data frame.

29. The method of claim 27 or 28, wherein there is a third time interval between a time position corresponding to data in the third data frame and a time position corresponding to the to-be-received synchronization sequence.

30. The method of claim 29, wherein the third time interval is configured by a network device or pre-configured.

31. The method of any one of claims 24-30, wherein the synchronization capability information of the terminal device is used to determine second scheduling information of the terminal device, and the second scheduling information is used to schedule the terminal device to receive a fourth data frame.

32. The method of claim 31, wherein the second scheduling information indicates a time length of the fourth data frame and/or second configuration information, and the second configuration information is used to configure synchronization sequence information used by the terminal device to receive the fourth data frame.

33. The method of claim 32, wherein the second configuration information is used to configure at least one of the following:
whether to receive a synchronization sequence during a process of receiving the fourth data frame;
a position of a to-be-received synchronization sequence in the process of receiving the fourth data frame;
a number of the to-be-received synchronization sequence; or
a length of the to-be-received synchronization sequence.

34. The method of claim 33, wherein the position of the to-be-received synchronization sequence in the process of receiving the fourth data frame comprises:
an initial position of the to-be-received synchronization sequence in the process of receiving the fourth data frame; and/or
a middle position of the to-be-received synchronization sequence in the process of receiving the fourth data frame.

35. The method of claim 33 or 34, wherein there is a fourth time interval between a time position corresponding to data in the fourth data frame and a time position corresponding to the to-be-received synchronization sequence.

36. The method of claim 35, wherein the fourth time interval is configured by a network device or pre-configured.

37. The method of any one of claims 22-36, wherein the terminal device obtains power for data transmission through power harvesting.

38. A method for wireless communication, comprising:
sending, by a network device, at least one synchronization sequence during a process of transmitting a data frame.

39. The method of claim 38, wherein sending, by the network device, the at least one synchronization sequence during the process of transmitting the data frame comprises:
sending, by the network device, at least one first synchronization sequence during a process of receiving a first data frame.

40. The method of claim 39, further comprising:
sending, by the network device, configuration information of the at least one first synchronization sequence.

41. The method of claim 40, wherein the configuration information of the at least one first synchronization sequence is used to configure at least one of the following:
a position of the at least one first synchronization sequence in a process of sending the first data frame;
a number of the at least one first synchronization sequence; or
a length of the at least one first synchronization sequence.

42. The method of claim 41, wherein the position of the at least one first synchronization sequence in the process of sending the first data frame comprises:
an initial position of the first synchronization sequence in the process of sending the first data frame; and/or
a middle position of the first synchronization sequence in the process of sending the first data frame.

43. The method of claim 41 or 42, wherein the configuration information of the at least one first synchronization sequence is sent by the network device through first scheduling information, and the first scheduling information is used to schedule the first data frame.

44. The method of any one of claims 40-43, wherein the configuration information of the at least one first synchronization sequence is determined based on a synchronization capability of a terminal device.

45. The method of any one of claims 39-44, wherein there is a first time interval between a time position corresponding to data in the first data frame and a time position corresponding to the first synchronization sequence.

46. The method of claim 45, wherein the first time interval is configured by the network device or pre-configured.

47. The method of any one of claims 38-46, wherein sending, by the network device, the at least one synchronization sequence during the process of transmitting the data frame comprises:
sending, by the network device, a second data frame, wherein the second data frame comprises at least one second synchronization sequence.

48. The method of claim 47, further comprising:
sending, by the network device, configuration information of the at least one second synchronization sequence.

49. The method of claim 48, wherein the configuration information of the at least one second synchronization sequence is used to configure at least one of the following:
a position of the at least one second synchronization sequence in a process of receiving the second data frame;
a number of the at least one second synchronization sequence; or
a length of the at least one second synchronization sequence.

50. The method of claim 49, wherein the position of the at least one second synchronization sequence in the process of receiving the second data frame comprises:
an initial position of the second synchronization sequence in the process of receiving the second data frame; and/or
a middle position of the second synchronization sequence in the process of receiving the second data frame.

51. The method of any one of claims 48-50, wherein the configuration information of the at least one second synchronization sequence is determined based on a synchronization capability of a terminal device.

52. The method of any one of claims 47-51, wherein there is a second time interval between a time position corresponding to data in the second data frame and a time position corresponding to the second synchronization sequence.

53. The method of claim 52, wherein the second time interval is configured by the network device or pre-configured.

54. The method of any one of claims 38-53, further comprising:
receiving, by the network device, synchronization capability information of a terminal device.

55. The method of claim 54, wherein the synchronization capability information of the terminal device comprises at least one of the following:
synchronization error information of the terminal device, or a maximum transmission duration corresponding to a maximum time error range allowed by the terminal device.

56. A method for wireless communication, comprising:
receiving, by a network device, synchronization capability information of a terminal device.

57. The method of claim 56, wherein the synchronization capability information of the terminal device comprises at least one of the following:
synchronization error information of the terminal device, or a maximum transmission duration corresponding to a maximum time error range allowed by the terminal device.

58. The method of claim 56 or 57, wherein the synchronization capability information of the terminal device is used for the network device to determine scheduling information of the terminal device.

59. The method of claim 58, wherein the synchronization capability information of the terminal device is used for the network device to determine first scheduling information of the terminal device, and the first scheduling information is used to schedule the terminal device to send a third data frame.

60. The method of claim 59, wherein the first scheduling information indicates a time length of the third data frame and/or first configuration information, and the first configuration information is used to configure synchronization sequence information used by the terminal device to send the third data frame.

61. The method of claim 60, wherein the first configuration information is used to configure at least one of the following:
whether to receive a synchronization sequence during a process of sending the third data frame;
a position of a to-be-received synchronization sequence in the process of sending the third data frame;
a number of the to-be-received synchronization sequence; or
a length of the to-be-received synchronization sequence.

62. The method of claim 61, wherein the position of the to-be-received synchronization sequence in the process of sending the third data frame comprises:
an initial position of the to-be-received synchronization sequence in the process of sending the third data frame; and/or
a middle position of the to-be-received synchronization sequence in the process of sending the third data frame.

63. The method of claim 61 or 62, wherein there is a third time interval between a time position corresponding to data in the third data frame and a time position corresponding to the to-be-received synchronization sequence.

64. The method of claim 63, wherein the third time interval is configured by the network device or pre-configured.

65. The method of any one of claims 58-64, wherein the synchronization capability information of the terminal device is used for the network device to determine second scheduling information of the terminal device, and the second scheduling information is used to schedule the terminal device to receive a fourth data frame.

66. The method of claim 65, wherein the second scheduling information indicates a time length of the fourth data frame and/or second configuration information, and the second configuration information is used to configure synchronization sequence information used by the terminal device to receive the fourth data frame.

67. The method of claim 66, wherein the second configuration information is used to configure at least one of the following:
whether to receive a synchronization sequence during a process of receiving the fourth data frame;
a position of a to-be-received synchronization sequence in the process of receiving the fourth data frame;
a number of the to-be-received synchronization sequence; or
a length of the to-be-received synchronization sequence.

68. The method of claim 67, wherein the position of the to-be-received synchronization sequence in the process of receiving the fourth data frame comprises:
an initial position of the to-be-received synchronization sequence in the process of receiving the fourth data frame; and/or
a middle position of the to-be-received synchronization sequence in the process of receiving the fourth data frame.

69. The method of claim 67 or 68, wherein there is a fourth time interval between a time position corresponding to data in the fourth data frame and a time position corresponding to the to-be-received synchronization sequence.

70. The method of claim 69, wherein the fourth time interval is configured by the network device or pre-configured.

71. The method of any one of claims 56-70, wherein the terminal device obtains power for data transmission through power harvesting.

72. A terminal device, comprising:
a communication unit, configured to transmit a data frame, wherein at least one synchronization sequence is received during a process of transmitting the data frame.

73. A terminal device, comprising:
a communication unit, configured to report synchronization capability information of the terminal device.

74. A network device, comprising:
a communication unit, configured to send at least one synchronization sequence during a process of transmitting a data frame.

75. A network device, comprising:
a communication unit, configured to receive synchronization capability information of a terminal device.

76. A terminal device, comprising: a memory, configured to store a computer program; and a processor, configured to call and run the computer program stored in the memory to perform the method of any one of claims 1 to 21, or the method of any one of claims 22 to 37.

77. A chip, comprising: a processor, configured to call and run a computer program in a memory, which causes a device on which the chip is installed to perform the method of any one of claims 1 to 21, or the method of any one of claims 22 to 37.

78. A computer-readable storage medium, configured to store a computer program, which causes a computer to perform the method of any one of claims 1 to 21, or the method of any one of claims 22 to 37.

79. A computer program product, comprising computer program instructions, which cause a computer to perform the method of any one of claims 1 to 21, or the method of any one of claims 22 to 37.

80. A computer program, causing a computer to perform the method of any one of claims 1 to 21, or the method of any one of claims 22 to 37.

81. A network device, comprising: a memory, configured to store a computer program; and a processor, configured to call and run the computer program stored in the memory to perform the method of any one of claims 38 to 55, or the method of any one of claims 56 to 71.

82. A chip, comprising: a processor, configured to call and run a computer program in a memory, which causes a device on which the chip is installed to perform the method of any one of claims 38 to 55, or the method of any one of claims 56 to 71.

83. A computer-readable storage medium, configured to store a computer program, which causes a computer to perform the method of any one of claims 38 to 55, or the method of any one of claims 56 to 71.

84. A computer program product, comprising computer program instructions, which cause a computer to perform the method of any one of claims 38 to 55, or the method of any one of claims 56 to 71.

85. A computer program, causing a computer to perform the method of any one of claims 38 to 55, or the method of any one of claims 56 to 71.
